# EUROPEAN PATENT APPLICATION

(11) **EP 4 852 135 A1**
(43) Date of publication of application: **09.12.2026**
(21) Application number: 26181819.9
(22) Date of filing: 29.05.2026
(51) Int. Cl.: H01M 10/42, H01M 10/48, H04B 11/00

(54) **BATTERY MANAGEMENT SYSTEM**

(30) Priority: 05.06.2025 KR 20250073715
(71) Applicant: SAMSUNG SDI CO., LTD., Yongin-si, Gyeonggi-do 17084 (KR)
(72) Inventor: OH, Seryong, 17084 Yongin-Si, Gyeonggi-do (KR); LEE, Hyunye, 17084 Yongin-Si Gyeonggi-do (KR)
(74) Representative: Gulde & Partner

(57) **Abstract**

A battery management system (1000, 2000) includes a plate (10) having a first surface on which battery cells (100) are disposed. At least one sound wave transmitter (200, 200') is disposed on a second surface of the plate (10) that is opposite to the first surface . At least one sound wave receiver (300, 300') is disposed on the second surface of the plate (10) and spaced apart from the sound wave transmitter (200, 200'). A controller (400, 400') is electrically connected to the sound wave transmitter (200, 200') and the sound wave receiver (300, 300').

## Description

### BACKGROUND

### 1. Field

The disclosure relates to a battery management system.

### 2. Description of the Related Art

Secondary batteries can be charged and discharged, unlike primary batteries that cannot be recharged. Low-capacity battery cells are used in small portable electronic devices, such as smartphones, feature phones, laptop computers, digital cameras, and camcorders. Large-capacity battery cells are widely used as power sources for driving motors in hybrid cars, electric cars, or the like, and are widely used as power storage batteries.

A battery cell includes an electrode assembly including a positive electrode and a negative electrode, a case for accommodating the electrode assembly, and electrode terminals or the like connected to the electrode assembly.

As a secondary battery is repeatedly charged and discharged, a solid electrolyte interphase (SEI) may be formed on the surface of an electrode plate. The SEI may reduce the performance and lifespan of the secondary battery.

The information disclosed in this section is only intended to improve understanding of the background of the disclosure and may include information that does not constitute prior art.

### SUMMARY

The invention is defined by the appended claims. The description that follows is subjected to this limitation. Any disclosure lying outside the scope of said claims is only intended for illustrative as well as comparative purposes.

The disclosure provides a battery management system capable of improving the lifespan of a battery.

However, objectives to be solved by the disclosure are not limited to the objectives expressly described herein, and other objectives not mentioned will be clearly understood by those skilled in the art from the description below.

A battery management system includes a plate having a first surface on which battery cells are disposed, at least one sound wave transmitter disposed on a second surface of the plate that is opposite to the first surface, at least one sound wave receiver disposed on the second surface of the plate and spaced apart from the sound wave transmitter, and a controller electrically connected to the sound wave transmitter and the sound wave receiver.

In an embodiment, the controller may be configured to control an intended operation of the sound wave receiver and the sound wave transmitter. In other words, the controller may be configured to transmit an electrical signal generated from the controller to the sound wave transmitter to generate sound waves. The controller may be configured to receive an electrical signal generated from the sound wave receiver based on a received sound wave.

In an embodiment, the sound wave receiver and the sound wave transmitter may be disposed directly or indirectly on the second surface.

The term disposed may mean direct or indirect contact.

In an embodiment, the sound wave transmitter may be configured to generate sound waves (e. g. through vibration) and to couple them into the plate, such that the generated sound waves are transmitted to the sound wave receiver through the plate and the battery cells.

In an embodiment, the sound wave receiver may be configured to receive a sound wave generated from the sound wave transmitter and transmitted through the plate and the battery cells and to transmit the received sound wave to the controller.

In an embodiment, the sound wave receiver may be configured to receive the transmitted sound waves.

In an embodiment, the battery cells may be configured as a module or pack in which the battery cells are accommodated in a case. The case of the module or pack in which the battery cells are accommodated may include the plate having the plurality of battery cells disposed on a surface thereof.

In an embodiment, the sound wave transmitter may be configured to convert an electrical signal into a sound wave, and the sound wave receiver may be configured to convert a sound wave into an electrical signal.

In an embodiment, each of the sound wave transmitter and the sound wave receiver may include a transducer, for example one using a crystal that exhibits a piezoelectric phenomenon. When functioning as a sound wave transmitter, the transducer is configured to convert an electrical signal from the controller into a mechanical vibration, thereby generating a sound wave that is transmitted to the plate. Conversely, when functioning as a sound wave receiver, the transducer is configured to convert a received sound wave into an electrical signal, which is then transmitted to the controller.

In an embodiment, the sound wave transmitter may be in contact with the plate, and its transducer may be positioned in an area in contact with the plate.

In an embodiment, the sound wave receiver may be in contact with the plate, and the transducer may be positioned in an area in contact with the plate.

In an embodiment, the controller may be configured to receive a signal from the sound wave receiver and to control an intensity of the sound wave transmitter.

In an embodiment, the controller may be configured to measure a frequency of the signal (e. g. a sound wave or a corresponding electric signal) received from the sound wave receiver.

In an embodiment, the controller may be configured to compare the frequency with a desired frequency, and based on a result from the comparison (e. g. a deviation from the desired frequency) to adjust an intensity (e. g. of an electrical signal) transmitted to the sound wave transmitter to adjust the frequency of the sound wave generated from the sound wave transmitter as desired.

In an embodiment, the sound wave transmitter may be configured to generate a surface acoustic wave.

In an embodiment, the transducers may be in (direct or indirect) contact with the plate, and a coupling agent, e. g. used as a contact medium, may be arranged between each of the transducers and the plate.

In one embodiment, the sound wave transmitter and sound wave receiver or the corresponding transducers may be configured to be brought into contact with the plate. In other words, they may switch between two positions (using an appropriate switching device), contacting the plate in one position and not in the other.

In an embodiment, the plate may be water-cooled. Such a water-cooled cooling plate may include a structure forming a flow path through which a cooling fluid is circulated.

In an embodiment, when the plate is water-cooled, the materials (iron, aluminum, non-ferrous casting, etc.) from which the plate is formed may be the same as the materials as a non-water-cooled plate except for a flow path formed in the plate.

In an embodiment, the surface acoustic wave may be applied into an interior of the plurality of battery cells.

In an embodiment, a frequency of the surface acoustic wave may be about 2 MHz to about 5 MHz.

In an embodiment, a frequency of the surface acoustic wave may be about 2.5 MHz to about 4.5 MHz. In an embodiment, a frequency of the surface acoustic wave may be about 3 MHz to about 5 MHz.

Another embodiment of the disclosure discloses a battery management system including a plate having a first surface on which battery cells are disposed, a charging device disposed on a second surface of the plate that is opposite to the first surface, a sound wave transmitter disposed on a surface of the charging device, with the surface of the charging device facing the plate (e. g. with a surface of the charging device that faces the second surface of the plate), a sound wave receiver disposed on the surface of the charging device and spaced apart from the sound wave transmitter, and a controller electrically connected to the sound wave transmitter and the sound wave receiver.

. In an embodiment, the charging device may include a device generally used to charge a battery.

In an embodiment, the charging device may be placed directly or indirectly on the second surface of the plate. In other words, the charging device is placed on a side of the plate where the second surface is located, with other elements or no other elements possibly placed between the charging device and the second surface.

In other words, the sound wave transmitter and the sound wave receiver of the embodiments described above may be disposable on the second surface of the plate, wherein they are arranged on the surface of the charging device. The term disposable is intended to encompass both a permanent arrangement where the components are fixedly disposed on the plate, as well as a non-permanent or temporary arrangement where the components are brought into contact with the plate, for example, by being mounted on a movable charging device that is placed on the plate. In other words, in one position the sound wave transmitter and the sound wave receiver may be disposed on the second surface of the plate and in another position may not be disposed on the second surface of the plate. The surface of the charging device on which they are arranged is located on the side of the plate where the second surface is located. In other words, the surface of the charging device on which they are arranged faces the second surface of the plate.

In an embodiment, the battery management system may further include an elastic member arranged between the charging device and the sound wave transmitter and between the charging device and the sound wave receiver.

In an embodiment, the elastic member may be arranged between the charging device and the sound wave transmitter and between the charging device and the sound wave receiver such that the sound wave transmitter and the sound wave receiver may be pressed to be in closer contact with the plate.

In an embodiment, the elastic member may include a spring.

In an embodiment, the charging device may be configured to reciprocally move in a direction toward the plate (and return). In other words, the charging device may be configured to be moved between two positions (using an appropriate switching device).

In an embodiment, the sound wave transmitter and the sound wave receiver may move into contact with or may be separated from the plate by the reciprocal movement of the charging device. Accordingly, the sound wave transmitter and the sound wave receiver may be configured to be brought into contact with or separated from the plate by the reciprocal movement of the charging device. In other words, the sound wave transmitter and the sound wave receiver may contact the plate in one position and not in the other.

In an embodiment, the elastic member may be compressed when the charging device reciprocally moves in a direction toward the plate thereby exhibiting an elastic force on the sound wave transmitter and the sound wave receiver such that the sound wave transmitter and the sound wave receiver are pressed in closer contact with the plate.

In an embodiment, each of the sound wave transmitter and the sound wave receiver may include a transducer.

In an embodiment, a coupling agent may be arranged between each of the transducers and the plate.

In an embodiment, the controller may be configured to receive a signal from the sound wave receiver and control an intensity of the sound wave transmitter.

In an embodiment, the sound wave transmitter may be configured to generate a surface acoustic wave.

In an embodiment, the surface acoustic wave may be applied into an interior of the plurality of battery cells.

In an embodiment, a frequency of the surface acoustic wave may be about 2 MHz to about 5 MHz.

In an embodiment, the plate is water-cooled.

In an embodiment, the battery management system may include a plurality of corresponding sound wave transmitters and a plurality of corresponding sound wave receivers corresponding to the plurality of sound wave transmitters.

In an embodiment, the plurality of battery cells may be arranged at a center (e. g. central part) of the first surface of the plate, which is rectangular, and the sound wave transmitters may be are arranged on the second surface at each corner of the plate. The sound wave receivers respectively corresponding to the sound wave transmitters may be arranged at the center (e. g. central part) of the second surface, that is, on the opposite side of the center where the plurality of battery cells may be disposed.

In an embodiment, respective sound wave receivers positioned at the central part and corresponding to the sound wave transmitters may be configured to measure the frequency fluctuation of the central part and to perform feedback control through the controller so that the frequency of each sound wave transmitter has the most similar intensity at the central part.

### BRIEF DESCRIPTION OF THE DRAWINGS

Aspects of the disclosure will become apparent and more readily appreciated from the drawings and following description of the embodiments.:
FIG. 1 is a perspective view of a battery management system according to an embodiment;
FIG. 2 is a perspective view showing the view from the direction A shown in FIG. 1;
FIG. 3 is a perspective view of a solid electrolyte interphase;
FIG. 4 is a front view of a battery management system according to another embodiment;
FIG. 5 is a cross-sectional view of the area B shown in FIG. 4;
FIG. 6A is a plan view of a transmitter and receiver that are disposed on a plate;
FIG. 6B is a diagram showing the intensity of elastic waves applied from the transmitter of FIG. 6A for each area;
FIG. 7 is a graph showing battery capacities according to charge and discharge cycles;
FIG. 8 is a graph showing the relationship between voltage and battery capacity; and
FIG. 9 is a graph showing the Coulombic efficiency according to charge and discharge cycles.

### DETAILED DESCRIPTION

Hereinafter, preferred embodiments of the disclosure will be described in detail with reference to the attached drawings. Terms or words used in this specification and claims should not be interpreted as limited to their usual or dictionary meanings, and should be interpreted to conform to the technical idea of the disclosure based on the principle that the inventor can appropriately define the concept of the term to explain his or her own disclosure in the best way. The embodiments described in this specification and the configurations illustrated in the drawings are only some of the most preferred embodiments of the disclosure and do not represent all of the technical ideas of the disclosure, and it should be understood that there may be modified examples at the time of filing this application.

It should be understood that terms such as "comprise/include" and/or "comprising/including" used herein are intended to specify the presence of stated shapes, numbers, steps, operations, parts, elements, and/or groups thereof, but do not preclude the presence or addition of one or more other shapes, numbers, operations, parts, elements, and/or groups thereof.

To aid understanding of the disclosure, the attached drawings are not drawn to scale, and the dimensions of some components may be exaggerated. In addition, the same reference numerals may be assigned to the same components in different embodiments.

Although the terms first, second, etc. are used to describe various components, these components are not limited by these terms. These terms are only used to distinguish one component from another. For example, unless otherwise stated a first component may also be a second component.

Throughout the specification, unless otherwise specifically stated, each component may be singular or plural.

Any configuration being disposed on "an upper portion (or a lower portion)" of a component or "on (or below)" a component may mean not only that the any configuration is disposed to be in contact with the upper surface (or lower surface) of the component, but also that other configurations may be interposed between the component and the any configuration disposed on (or below) the component.

When it is described that a component is "linked," "coupled," or "connected" to another component, it should be understood that the components may be directly linked or connected to each other, but that other components may also be "interposed" between the components, or that each component may be "linked," "coupled," or "connected" through other components. When it is said that a part is electrically coupled to another part, this includes configurations where they are directly connected and also configurations where they are connected with another element in between.

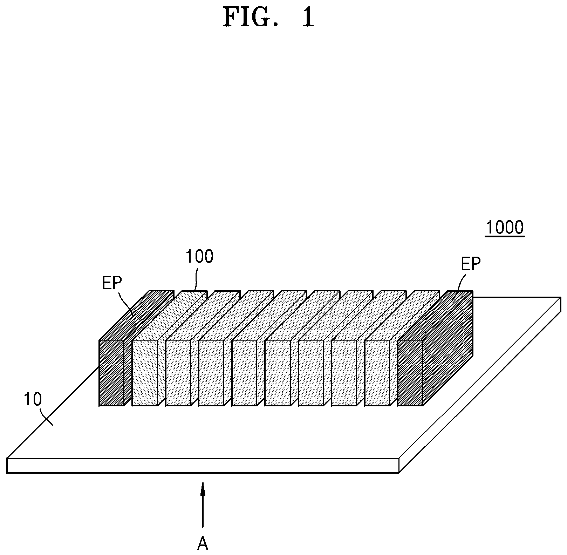

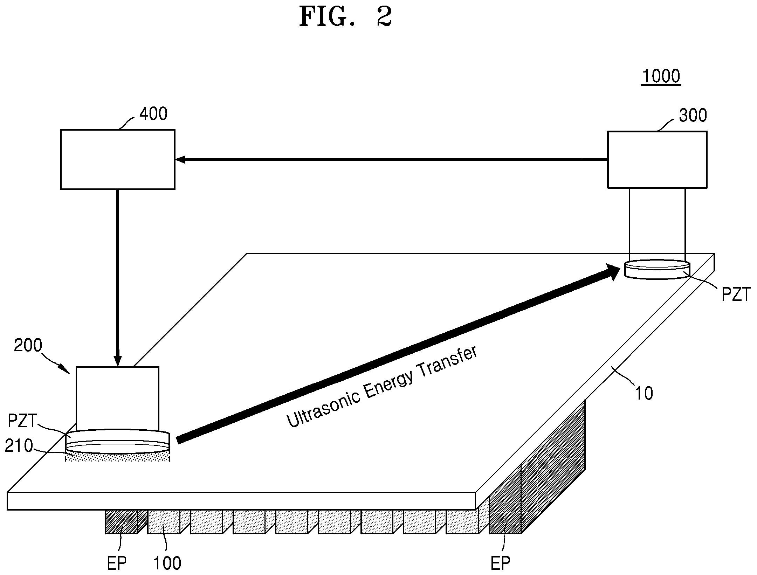

FIG. 1 is a perspective view of a battery management system according to an embodiment, and FIG. 2 is a perspective view showing the view from a direction A of FIG. 1.

Referring to FIGS. 1 and 2, a battery management system 1000 may include a plate 10, with a plurality of battery cells 100 being disposed on a first surface of the plate 10. A sound wave transmitter 200 may be disposed on a second surface of the plate 10 that is opposite to the first surface on which the battery cells 100 are disposed. A sound wave receiver 300 may be disposed on the second surface of the plate 10 and spaced apart from the sound wave transmitter 200. A controller 400 may be electrically connected to the sound wave transmitter 200 and the sound wave receiver 300.

Depending on the intended use, a battery cell 100 may be configured as a module or pack in which the plurality of battery cells 100 are accommodated in a case. In such a configuration, the case of the module or pack in which the battery cells are accommodated may include the plate 10 having the plurality of battery cells 100 disposed on a surface thereof.

Additionally, the case of the module or pack may include an end plate EP, and the end plate EP may be positioned on both sides of the plurality of battery cells 100 while pressurizing the plurality of battery cells 100. The end plate EP may be positioned while pressurizing the plurality of battery cells 100, thereby helping the battery cells 100 to operate properly and protecting the battery cells 100 from the external environment.

In some embodiments, the plate 10 may be water-cooled. Such a water-cooled cooling plate may include a structure forming a flow path through which a cooling fluid is circulated.

At least one sound wave transmitter 200 and at least one sound wave receiver 300 may be disposed on the second surface of the plate 10. That is, the sound wave transmitter 200 may be disposed on the surface opposite to the first surface of the plate 10 on which the battery cells 100 are disposed to generate sound waves through vibration. As described below, the generated sound waves may be transmitted to the sound wave receiver 300 through the battery cells 100.

In one example, the sound wave transmitter 200 is in contact with the plate 10, and a transducer PZT is positioned in an area in contact with the plate 10. The transducer PZT may include, for example, a piezoelectric (PZT) transducer. The PZT transducer may convert an electrical signal into a mechanical vibration or a mechanical vibration into an electrical signal by using a crystal that exhibits a piezoelectric phenomenon. Such a transducer PZT may convert an electrical signal generated from the controller 400 into a mechanical vibration to generate a sound wave and transmit the sound wave to the plate 10.

The sound wave generated from the sound wave transmitter 200 may include, for example, a surface acoustic wave (SAW). Here, SAW means an acoustic wave that propagates along the surface of an elastic substrate. The acoustic wave may be generated from an electric signal as a result of a piezoelectric effect. The SAW may be transmitted along the surface of the plate 10 to the battery cells 100 and may be applied to the interior of the battery cells 100.

When the plate 10 includes a water-cooled cooling plate, the materials (iron, aluminum, non-ferrous casting, etc.) forming the water-cooled cooling plate may be the same as the materials configuring the plate 10 except for the flow path flowing therein, and the flow path may be arranged in an area between the materials configuring the plate 10. In this configuration, because the SAW is transmitted along a solid surface, the SAW may not be applied to the cooling fluid flowing through the flow path, and the SAW may be transmitted to the battery cells 100 along the solid surface inside the plate 10 excluding the flow path.

In some embodiments, the frequency of the SAW may be about 2 MHz to about 5 MHz to maximize penetration based on the density of the battery cells 100 and the materials (iron, aluminum, non-ferrous casting, etc.) from which the plate 10 is formed. When the frequency of the SAW is less than 2 MHz, there is a problem in that the SAW may not penetrate the battery cells 100 and the plate 10. When the frequency of the SAW exceeds 5 MHz, damage may occur to the electrode plates or the like inside the battery cells 100.

In some embodiments, a coupling agent 210 used as a contact medium may be positioned between the transducer PZT and the plate 10. The coupling agent 210 may remove the air between the transducer PZT and the plate 10 so that the transducer PZT and the plate 10 achieve acoustic impedance harmony, thereby improving sound wave transmission efficiency.

The sound wave receiver 300 may be disposed on the second surface opposite to the first surface of the plate 10 on which the battery cells 100 are disposed to receive a sound wave generated from the sound wave transmitter 200 and transmit the received sound wave to the controller 400. The controller 400 may measure the frequency of the sound wave received from the sound wave receiver 300. When the measured frequency is not the desired frequency the controller may adjust the intensity of an electrical signal to adjust the frequency of the sound wave generated from the sound wave transmitter 200 as needed. In one example, the sound wave receiver 300 is in contact with the plate 10, and the transducer PZT is positioned in an area in contact with the plate 10.

The transducer PZT may include, for example, a PZT transducer that converts an electrical signal into a mechanical vibration or a mechanical vibration into an electrical signal by using a crystal that exhibits a piezoelectric phenomenon. Such a transducer PZT may convert a sound wave generated from the sound wave transmitter 200 into an electrical signal, and the converted electrical signal may be transmitted to the controller 400.

The controller 400 may generate an electrical signal and adjust the frequency of a sound wave generated from the sound wave transmitter 200 by adjusting the intensity of the electrical signal. When the frequency of the sound wave received from the sound wave receiver 300 is not the desired frequency, the intensity of the electrical signal transmitted to the sound wave transmitter 200 may be adjusted to adjust the frequency of the sound wave generated from the sound wave transmitter 200 as needed.

As the battery cells 100 are repeatedly charged and discharged, a solid electrolyte interphase (SEI) may be formed on the surface of an electrode plate due to electrolyte precipitate. The SEI may hinder the circulation of lithium ions and reduce the performance and stability of the batteries. The SEI may also the battery cells 100 to swell.

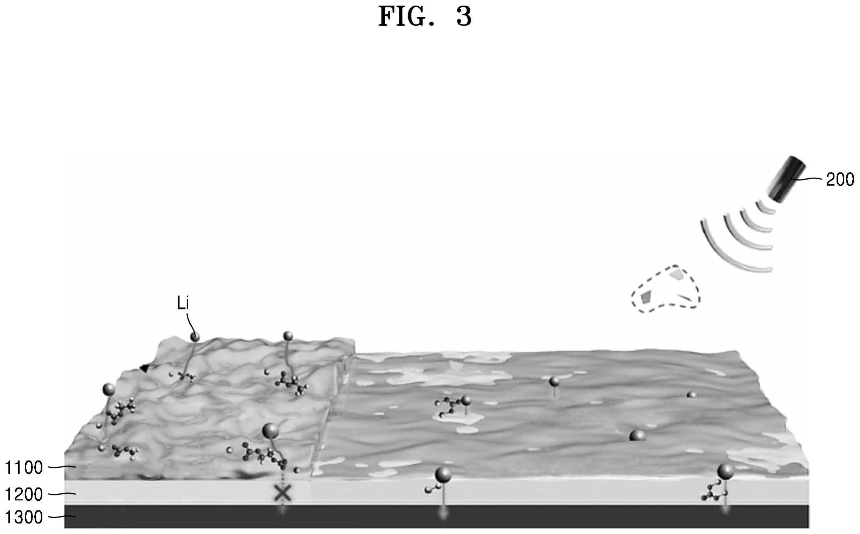

FIG. 3 is a perspective view of an SEI.

Referring to FIG. 3, the SEI may include a first layer 1100 and a second layer 1200, and the SEI may be formed by electrolyte precipitate attaching to the surface of an electrode plate 1300.

The first layer 1100 may be a rough, thick surface that, among the electrolyte precipitate, is rich in organic species, such as LiMC, LiEC, and Li₂EDC, among electrolyte precipitate. This first layer 1100 may hinder the circulation of lithium ions Li by making it difficult for lithium ions Li to pass through the SEI, thereby increasing the internal resistance of the battery and lowering battery performance.

The second layer 1200 may be rich in inorganic materials, such as Li₂CO₃ and LiF, among the electrolyte precipitate. As such, the lithium ions Li may easily pass through the second layer 1200.

When a sound wave generated through the sound wave transmitter 200 is applied to the first layer 1100, the organic species of the first layer 1100 may be destroyed and separated from the second layer 1200, and the shape of the surface of the first layer 1100 may be made flat. In this way, the chemical composition of the SEI where the organic species on the surface are destroyed may be changed to become rich in inorganic materials, and the surface of the first layer 1100 may be flattened to thereby allow lithium ions Li to easily pass through so that charge transfer between the electrode plates and the electrolyte may be facilitated. Thus, the resistance inside the battery may be reduced and the electrochemical performance of the battery may be improved.

The sound wave applied by the sound wave transmitter 200 may include an SAW, and the frequency of the SAW may be about 2 MHz to about 5 MHz. When the frequency of the SAW is less than 2 MHz, there may be a problem in that the SAW may not penetrate the battery cell and the plate to destroy the organic species of the first layer 1100. When the frequency of the SAW exceeds 5 MHz, damage may occur to the electrode plate 1300.

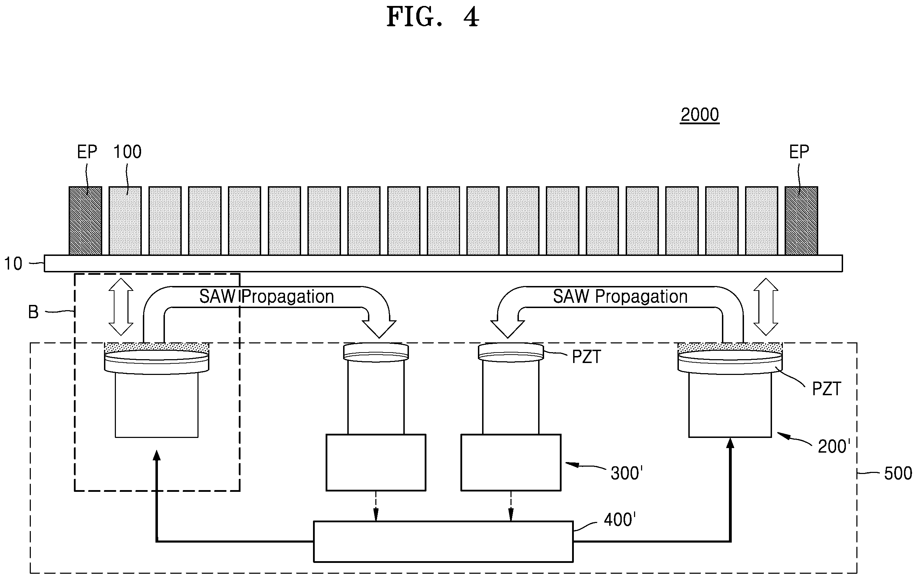

FIG. 4 is a front view of a battery management system according to another embodiment of the present disclosure.

Referring to FIG. 4, a battery management system 2000 may include a plate 10, with a plurality of battery cells 100 being disposed on a first surface of the plate 10. And the end plate EP may be positioned on both sides of the plurality of battery cells 100. A charging device 500 is disposed on a second surface of the plate 10 that is opposite to the first surface of the plate 10. At least one sound wave transmitter 200' may be disposed on the surface of the charging device 500 that faces (e.g. that faces the second surface of the plate 10) the plate 10. At least one sound wave receiver 300' may also be disposed on the surface (e.g. that faces the second surface of the plate 10) of the charging device 500 and spaced apart from the sound wave transmitter 200'. A controller 400' may be electrically connected to the sound wave transmitter 200' and the sound wave receiver 300'.

Depending on the intended use, a battery cell 100 may be configured as a module or pack in which the plurality of battery cells 100 are accommodated in a case. In such configurations, the case of the module or pack in which the battery cells are accommodated may include the plate 10 having the plurality of battery cells 100 disposed on a surface of the plate 10.

In some embodiments, the plate 10 may include a water-cooled cooling plate, and the water-cooled cooling plate may include a structure in which a flow path is formed to allow a cooling fluid to circulate through the plate 10.

The charging device 500 may be disposed on a second surface of the plate 10 that is opposite to the first surface. The charging device 500 may include a device generally used to charge a battery. For example, the charging device may be a charging station that wirelessly charges a battery.

The sound wave transmitter 200' and the sound wave receiver 300' may be disposed on the surface of the charging device 500 that faces the plate 10. The sound wave transmitter 200' and the sound wave receiver 300' may be electrically connected to the controller 400' of the charging device 500.

The charging device 500 may reciprocally move in a direction toward the plate 10. When the battery cells 100 do not need to be charged, the charging device 500 may be separated from the plate 10. When the battery cells 100 need to be charged, the charging device 500 may be moved into contact with the plate 10. Then, when charging is completed, the charging device 500may move in a direction away from the plate 10 to become separated from the plate 10.

When the charging device 500 moves into contact with the plate 10 to charge the battery cells 100, the sound wave transmitter 200' and the sound wave receiver 300', which are disposed on the surface of the charging device 500 that faces the plate 10, may also come into contact with the plate 10. An elastic member may be arranged between the charging device 500 and the sound wave transmitter 200' and between the charging device 500 and the sound wave receiver 300' so that the sound wave transmitter 200' and the sound wave receiver 300' may be pressed to be in closer contact with the plate 10.

The sound wave transmitter 200' may be disposed on a surface of the charging device 500 that faces the plate 10. As such, when the charging device 500 moves into contact with the plate 10 to charge the battery cells 100, the sound wave transmitter 200' moves into contact with the second surface of the plate 10 that is opposite to the first surface on which the battery cells 100 are disposed, and the sound wave transmitter 200' may generate sound waves through vibration. The generated sound waves may be coupled into the plate 10 and the battery cells 100 and may be transmitted to the sound wave receiver 300' through the battery cells 100.

In some examples, the sound wave transmitter 200' may include a transducer PZT positioned in an area in contact with the plate 10. The transducer PZT may include, for example, a PZT transducer that converts an electrical signal into a mechanical vibration or a mechanical vibration into an electrical signal by using a crystal that exhibits a piezoelectric phenomenon. As discussed above, such a transducer PZT may convert an electrical signal generated from the controller 400' into a mechanical vibration to generate a sound wave and transmit the sound wave to the plate 10.

The sound wave generated from the sound wave transmitter 200' may include, for example, an SAW that is transmitted to the battery cells 100 along the surface of the plate 10 such that the SAW is applied to the interior of the battery cells 100.

When the plate 10 is water-cooled, the materials (iron, aluminum, non-ferrous casting, etc.) from which the plate is formed may be the same as the materials as a non-water-cooled plate 10 except for the flow path formed in the plate 10. The flow path may be arranged in an area in the plate 10. Because the SAW is transmitted along a solid surface, the SAW may not be applied to the cooling fluid flowing along the flow path and may be transmitted to the battery cells 100 along the solid surface inside the plate 10.

The frequency of the SAW may be about 2 MHz to about 5 MHz to maximize penetration according to the density of the battery cells 100 and the materials (iron, aluminum, non-ferrous casting, etc.) from which the plate 10 is formed. When the frequency of the SAW is less than 2 MHz, there is a problem in that the SAW may not penetrate the battery cells 100 and the plate 10. When the frequency of the SAW exceeds 5 MHz, damage may occur to the electrode plates inside the battery cells 100.

In some embodiments, a coupling agent used as a contact medium positioned between the transducer PZT and the plate 10. The coupling agent may remove the air between the transducer PZT and the plate 10 so that the transducer PZT and the plate 10 achieve acoustic impedance harmony, which thereby improves sound wave transmission efficiency.

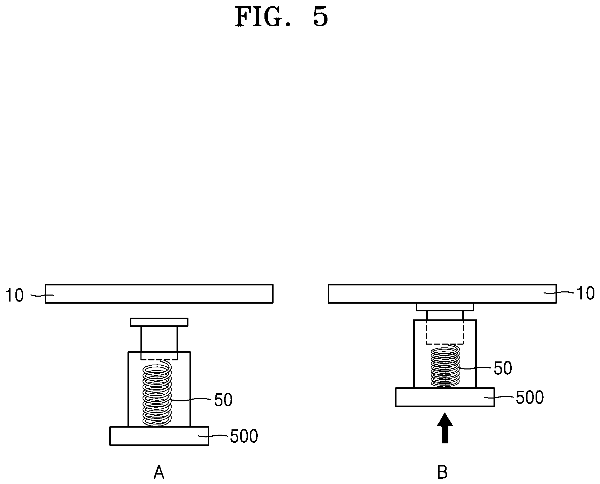

FIG. 5 is a cross-sectional view of the area B in FIG. 4.

Referring to FIG. 5, an elastic member 50 may be arranged between the sound wave transmitter 200' and the charging device 500. In a particular example, the elastic member 50 may be arranged between the transducer PZT and the charging device 500. When the battery cells 100 do not need to be charged, the charging device 500 may be spaced apart from the plate 10. When the charging device 500 moves in a direction of the plate 10 to contact the plate 10 to charge the battery cells 100, the elastic member 50 arranged between the transducer PZT and the charging device 500 may be compressed in the direction B. Thus, the transducer PZT may be pressed in the direction toward the plate 10 by the elastic force of the elastic member 50 to move closer to the plate 10. In this way, the transducer PZT may be in closer contact with the plate 10 by being pressed in the direction of the plate 10, thereby improving sound wave transmission efficiency.

The elastic member 50 may include, for example, a spring. When the charging device 500 comes into contact with the plate 10, the spring arranged between the transducer PZT and the charging device 500 may be compressed. Thus, the transducer PZT may be pressed in the direction of the plate 10 by the elastic force of the compressed spring to come into closer contact with the plate 10.

At least one sound wave receiver 300' may be disposed on a surface of the charging device 500 and spaced apart from the sound wave transmitter 200'. When the charging device 500 comes into contact with the plate 10 to charge the battery cells 100, the sound wave generated by the sound wave transmitter 200' may be received and transmitted to the controller 400'. The controller 400' may measure the frequency of the sound wave received from the sound wave receiver 300' and may adjust the intensity of an electrical signal to adjust the frequency of the sound wave generated from the sound wave transmitter 200' as needed when the measured frequency is not the desired frequency.

In some examples, the sound wave receiver 300' may include the transducer PZT positioned in an area in contact with the plate 10. The transducer PZT may convert a sound wave generated from the sound wave transmitter 200' into an electrical signal, and the converted electrical signal may be transmitted to the controller 400'.

In some embodiments, a coupling agent is used as a contact medium positioned between the transducer PZT and the plate 10. The coupling agent may improve the sound wave transmission efficiency between the transducer PZT and the plate 10.

The controller 400' may include an electronic control unit (ECU) and charging device 500 and may adjust the frequency of a sound wave generated from the sound wave transmitter 200' by adjusting the intensity of an electrical signal. When the frequency of the sound wave received from the sound wave receiver 300' is not the desired frequency, the intensity of the electrical signal transmitted to the sound wave transmitter 200' may be adjusted to thereby adjust the frequency of the sound wave generated from the sound wave transmitter 200' as needed.

As the battery cells 100 are repeatedly charged and discharged, electrolyte precipitate may cause an SEI to be formed on the surface of an electrode plate. The SEI may hinder the circulation of lithium ions and reduce the performance and stability of the batteries. In some instances, the SEI may cause the battery cells 100 to swell.

Referring again to FIG. 3, the SEI may include the first layer 1100 and the second layer 1200, and may be formed by attaching electrolyte precipitate to the surface of the electrode plate 1300. The first layer 1100 may be rough, thick, and rich in organic species, such as LiMC, LiEC, and Li₂EDC. Thus, it may be difficult for lithium ions Li to pass through the first layer 1100, thereby increasing the internal resistance of the battery and lowering the performance of the battery.

The second layer 1200 may include a layer rich in inorganic materials, such as Li₂CO₃ and LiF, among the electrolyte precipitate. Thus, the lithium ions Li may easily pass through the second layer 1200.

When a sound wave generated by the sound wave transmitter 200' is applied to the first layer 1100, the organic species on the surface of the first layer 1100 may be destroyed and changed to be rich in inorganic materials, and the surface of the first layer 1100 may be flattened. Thus, lithium ions Li may easily pass through the first layer 1100, thereby reducing the resistance inside the battery and improving the electrochemical performance of the battery.

The sound wave applied by the sound wave transmitter 200' may include an SAW, and the frequency of the SAW may be about 2 MHz to about 5 MHz. When the frequency of the SAW is less than 2 MHz, there is a problem in that the SAW may not penetrate the battery cell and the plate to destroy the organic species of the first layer 1100. When the frequency of the SAW exceeds 5 MHz, damage may occur to the electrode plate 1300.

The battery management system 2000 according to embodiments of the disclosure may include a plurality of sound wave transmitters 200' and a plurality of sound wave receivers 300' to apply sound waves of a uniform frequency to the battery cells 100.

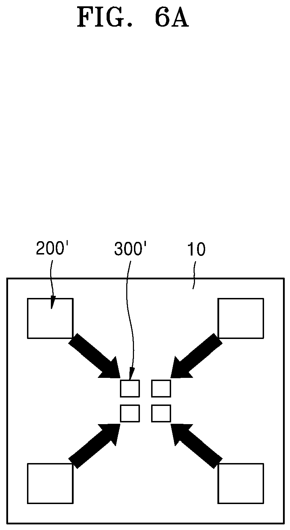

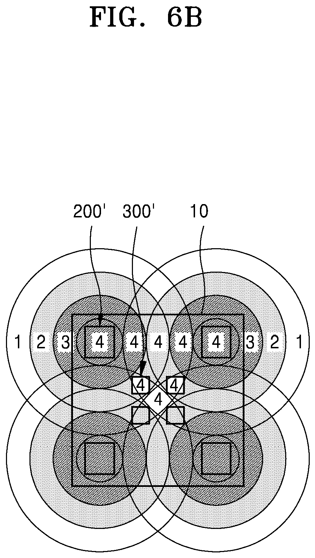

FIG. 6A is a plan view of a transmitter and receiver, that are disposed on a plate. FIG. 6B is a diagram showing the intensity of elastic waves applied from the transmitter of FIG. 6A for each area.

Referring to FIGS. 6A and 6B, the battery management system 2000 may include a plurality of sound wave transmitters 200' on a second surface of the plate 10 that is opposite to a first surface of the plate 100 on which the plurality of battery cells 100 are disposed. A plurality of sound wave receivers 300' may be spaced apart and correspond to the plurality of sound wave transmitters 200'.

In a specific example, the plurality of battery cells are arranged at the center of the first surface of the plate 10, which is rectangular, and the sound wave transmitters 200' are arranged on the second surface at each corner of the plate 10. And the sound wave receivers 300' respectively corresponding to the sound wave transmitters 200' are arranged at the center of the second surface, that is, on the opposite side of the center where the plurality of battery cells are disposed.

Each of the four sound wave transmitters 200' positioned at a corner of the plate 10 may apply a sound wave. When the intensity of the sound wave applied is 4, it may be confirmed that the sound wave spreads out in concentric circles and gradually decreases in relative intensities 3, 2, and 1 as the sound wave gets farther away from the sound wave transmitter 200'. However, the sound waves generated from the four sound wave transmitters 200' positioned at the corners of the plate 10 may interfere constructively with each other such that sound waves of the same or similar intensity as relative intensity 4, which is the intensity initially applied from the sound wave transmitter 200', may be applied to the entire area of the plate 10. As sound waves constructively interfere with each other, sound waves of the same or similar intensity as 4 may be applied to the entire area of the plate 10, so that uniform sound waves may be applied to each of the plurality of battery cells arranged in the center of one surface of the plate 10.

In some embodiments, respective sound wave receivers 300' positioned at the central part and corresponding to the sound wave transmitters 200' may measure the frequency fluctuation of the central part and perform feedback control through the controller 400' so that the frequency of each sound wave transmitter 200' has the most similar intensity at the central part.

A battery management system according to some embodiments has four sound wave transmitters 200' and sound wave receivers 300' disposed on the plate 10. But the disclosure is not limited to such a configuration, and the number and arrangement of the sound wave transmitters 200' and sound wave receivers 300' may be easily changed depending on the usage environment.

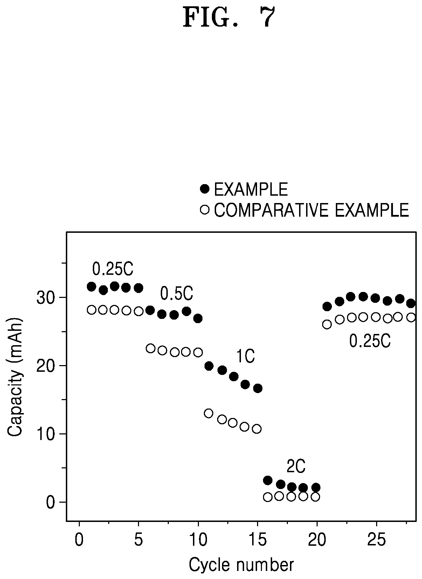

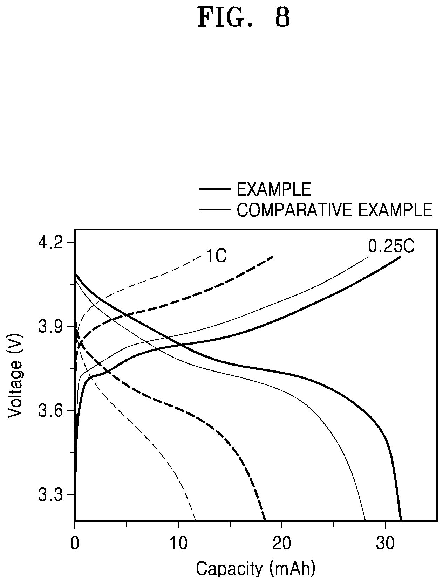

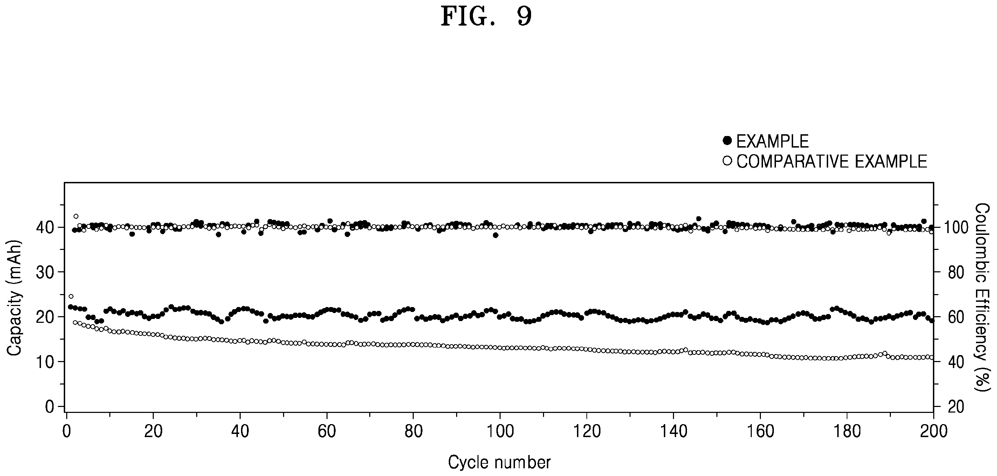

FIG. 7 is a graph showing battery capacities according to charge and discharge cycles, FIG. 8 is a graph showing the relationship between voltage and battery capacity, and FIG. 9 is a graph showing the Coulombic efficiency according to charge and discharge cycles.

Referring to FIG. 7, when a battery module or pack to which a battery management system according to embodiments is applied, it is confirmed that the battery capacity is improved per charge and discharge cycle compared to a comparative example to which the battery management system is not applied.

In other words, FIG. 7 illustrates the discharge capacity (y-axis) over a number of cycles (x-axis) at different C-rates (0.25C, 0.5C, 1C, and 2C). The data points represented by black circles show the performance of the battery system according to the example (with the system according to the disclosure), while the data points represented by white circles show the comparative example (without the system according to the disclosure). The graph demonstrates that the example maintains a significantly higher capacity across all tested C-rates, with the performance advantage becoming more pronounced at higher discharge rates (1C and 2C), where the capacity of the comparative example drops sharply. This indicates a substantial improvement in battery lifespan and performance under load.

Referring to FIG. 8, when a battery module or pack to which a battery management system according to embodiments is applied, it is confirmed that the battery capacity per voltage is improved compared to a comparative example to which the battery management system is not applied.

In other words, FIG. 8 shows charge and discharge voltage profiles (y-axis) versus capacity (x-axis) at 0.25C and 1C rates. The solid lines represent the example, and the dashed lines represent the comparative example. For each C-rate, the upper curve shows the voltage during charging, and the lower curve shows the voltage during discharging. The graph reveals two key improvements: Firstly, the solid lines extend further along the capacity axis, indicating a higher overall usable capacity for the example. Secondly, the vertical gap between the charge and discharge curves is visibly smaller for the solid lines (example) than for the dashed lines (comparative example). This smaller voltage gap signifies a lower internal resistance and thus higher energy efficiency of the battery.

Referring to FIG. 9, when a battery module or pack to which a battery management system according to embodiments is applied, it is confirmed that the Coulombic efficiency is improved based on 40 mAh compared to a comparative example to which the battery management system is not applied.

In other words, FIG. 9 shows the results of a long-term cycling test over 200 cycles, displaying both the capacity retention (left y-axis, in mAh) and the Coulombic efficiency (right y-axis, in %). The data points represented by black circles correspond to the example, and those represented by white circles correspond to the comparative example. Regarding capacity, the example (upper trend of circles) maintains a stable and high capacity of around 40 mAh, while the capacity of the comparative example (lower trend of circles) continuously degrades over the 200 cycles. Regarding efficiency, the data points for the example (clustered at the top) show a consistently higher and more stable Coulombic efficiency compared to the comparative example, demonstrating superior long-term performance and stability.

The battery management system according to embodiments may improve the electrochemical performance and lifespan of a battery by changing the composition of an SEI formed on the surface of an electrode plate by using an ultrasonic generator to apply ultrasonic waves to the surface of the electrode plate positioned inside a battery cell.

Although the disclosure has been described above by means of limited embodiments and drawings, the disclosure is not limited thereto, and it is obvious that various modifications are possible by a person skilled in the art to which the disclosure pertains.

## Claims

1. A battery management system (1000, 2000) comprising:
a plate (10) having a first surface on which battery cells (100) are disposed;
a sound wave transmitter (200, 200') disposed on a second surface of the plate (10) that is opposite to the first surface;
a sound wave receiver (300, 300') disposed on the second surface of the plate (10) and spaced apart from the sound wave transmitter (200, 200'); and
a controller (400, 400') electrically connected to the sound wave transmitter (200, 200') and the sound wave receiver (300, 300').

2. The battery management system (1000, 2000) of claim 1, wherein the sound wave transmitter (200, 200') is configured to convert an electrical signal into a sound wave, and
wherein the sound wave receiver (300, 300') is configured to convert a sound wave into an electrical signal.

3. The battery management system (1000, 2000) of claim 2, wherein each of the sound wave transmitter (200, 200') and the sound wave receiver (300, 300') comprises a transducer (PZT).

4. The battery management system (1000, 2000) of any one of claims 1 to 3, wherein the controller (400, 400') is configured to receive a signal from the sound wave receiver (300, 300') and to control an intensity of the sound wave transmitter (200, 200').

5. The battery management system (1000, 2000) of any one of claims 1 to 4, wherein the sound wave transmitter (200, 200') is configured to generate a surface acoustic wave (SAW).

6. The battery management system (1000, 2000) of claim 5, wherein the surface acoustic wave (SAW) is applied into an interior of the plurality of battery cells (100).

7. The battery management system (1000, 2000) of claim 5 or 6, wherein a frequency of the surface acoustic wave (SAW) is about 2 MHz to about 5 MHz.

8. A battery management system (1000, 2000) comprising:
a plate (10) having a first surface on which battery cells (100) are disposed;
a charging device (500) disposed on a second surface of the plate (10) that is opposite to the first surface;
a sound wave transmitter (200, 200') disposed on a surface of the charging device (500) with the surface of the charging device (500) facing the plate (10);
a sound wave receiver (300, 300') disposed on the surface of the charging device (500) and spaced apart from the sound wave transmitter (200, 200'); and
a controller (400, 400') electrically connected to the sound wave transmitter (200, 200') and the sound wave receiver (300, 300').

9. The battery management system (1000, 2000) of claim 8, further comprising elastic members (50) arranged between the charging device (500) and the sound wave transmitter (200, 200') and between the charging device (500) and the sound wave receiver (300, 300').

10. The battery management system (1000, 2000) of claim 8 or 9, wherein the charging device (500) is configured to reciprocally move in a direction toward the plate (10).

11. The battery management system (1000, 2000) of claim 10, wherein the sound wave transmitter (200, 200') and the sound wave receiver (300, 300') move into contact with or are separated from the plate (10) by the reciprocal movement of the charging device (500).

12. The battery management system (1000, 2000) of any one of claims 8 to 11, wherein each of the sound wave transmitter (200, 200') and the sound wave receiver (300, 300') comprises a transducer (PZT).

13. The battery management system (1000, 2000) of any one of claims 8 to 12, wherein the controller (400, 400') is configured to receive a signal from the sound wave receiver (300, 300') and to control an intensity of the sound wave transmitter (200, 200').

14. The battery management system (1000, 2000) of any one of claims 8 to 13, wherein the sound wave transmitter (200, 200') is configured to generate a surface acoustic wave (SAW).

15. The battery management system (1000, 2000) of claim 14, wherein the surface acoustic wave (SAW) is applied into an interior of the plurality of battery cells (100).
